# EUROPEAN PATENT SPECIFICATION

(11) **EP 2 627 121 B1**
(45) Date of publication and mention of the grant of the patent: **07.01.2015**
(21) Application number: 12290063.2
(22) Date of filing: 13.02.2012
(51) Int. Cl.: H04W 36/00

(54) **A method for efficient mobility handling in a mobile communication system**
Verfahren zur effizienten Handhabung in einem mobilen Kommunikationssystem
Procédé pour la gestion efficace de la mobilité dans un système de communication mobile

(43) Date of publication of application: 14.08.2013
(73) Proprietor: ALCATEL LUCENT, 92100 Boulogne-Billancourt (FR)
(72) Inventor: Aydin, Osman, 70569 Stuttgart (DE); Aziz, Danish, 70435 Stuttgart (DE)
(74) Representative: Wetzel, Emmanuelle

(56) References cited:
- NOKIA SIEMENS NETWORKS ET AL: "Enhancements for Small Cell Detection", 3GPP DRAFT; R2-120523_SMALL CELL DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565426, [retrieved on 2012-01-31]
- "3rd Generation Partnership Project; Technical Specification Group Radio Access Network; Evolved Universal Terrestrial Radio Access (E-UTRA); Radio Resource Control (RRC); Protocol specification (Release 10)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V10.4.0, 20 December 2011 (2011-12-20), pages 1-296, XP050555028, [retrieved on 2011-12-20]
- ZTE: "Discussion on enhancement of small cell discovery", 3GPP DRAFT; R2-114951, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 3 October 2011 (2011-10-03), XP050540767, [retrieved on 2011-10-03]
- RENESAS MOBILE EUROPE LTD: "Enhancement of proximity indication in heterogeneous networks", 3GPP DRAFT; R2-115139_ENHANCED PROXIMITY INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 3 October 2011 (2011-10-03), XP050540809, [retrieved on 2011-10-03]

## Description

### Field of the invention

The invention relates to mobile telecommunications systems, and more particularly, to a method for efficient mobility handling in a mobile communication system.

### Background

Long Term Evolution (LTE) is a next generation communication technology developed by the 3rd Generation Partnership Project (3GPP). The LTE have a hierarchal cellular structure in which one or more pico cells are deployed together with macro cells. In contrast to the macro cells, the pico cells have a limited coverage area, due to their limited output power.

The introduction of different types of cells creates new challenges for mobility procedures when a particular user equipment is moving between those cells. Problems occur especially in the preparation of an inter-frequency handover, after which the user equipment can initiate a handover from a macro cell to a pico cell. This is due to the fact that the legacy inter-rat/inter-frequency measurements are originally adopted from the macro cells only. Thus, considering the pico cells in such measurements is needed.

Nokia Siemens Networks et al. :" Enhancements for Small Cell Detection"3GPP TSG-RAN WG2 Meeting #77, R2-120523 Dresden, Germany, 31 January 2012 discloses possible solutions that addresse the small cell discovery objective of the Hetnet Mobility Enhancements study item.

3GPP TS 36.331 V9.9.0 (2011-12), "3rd Generation Partnership Project; Technical Specification Group Radio Access Network; Evolved Universal Terrestrial Radio Access (E-UTRA); Radio Resource Control (RRC); Protocol specification (Release 9)" specifies the Radio Resource Control protocol for the UE-E-UTRAN radio interface.

3GPP TSG-RAN WG2 Meeting #75bis, R2-114951, 10 - 14 October 2011, Zhuhai, China, "Discussion on enhancement of small cell discovery" discloses small cell discovery/identification scenarios and directions of possible enhancements.

3GPP TSG-RAN WG2 Meeting #75bis R2-115139 Zhuhai, China, 10 - 14 October 2011, "Enhancement of proximity indication in heterogeneous networks" discloses alternative method that UEs could use for determining with reasonable accuracy when to send proximity indications.

### Summary of the invention

It is an objective of the present invention to provide a method, a measurement controller and a mobile station for efficient mobility handling in a mobile communication system. Said objective is solved by the subject matter of the independent claims. Advantageous embodiments are described in the dependent claims.

The term "macro cell" as used herein refers to a coverage area, or geographical area, having a greater radius given by its higher output power as compared to a pico cell. The term "pico cell," refers to smaller sized coverage area such as a femto cell, micro cell or small cell.

The term "adjacent or neighboring" when referring to the position of one cell relative to the position of another cell, refers to the two cells being physically near to each other and/or overlapping in coverage in whole or part.

The term "E-UTRAN" stands for Evolved Universal Terrestrial Radio Access Network.

The term "RAT" refers to a Radio Access Technology such as Global System for Mobile Communications (GSM), Universal Mobile Telecommunications System (UMTS) and LTE systems. In such systems, the radio access controllers are implemented as an access node (NA) under LTE system, Radio Network Controller (RNC) under UMTS system and Base Station Controller (BSC) under GSM system.

In one aspect, the present invention relates to a method for efficient mobility handling in a mobile communication system comprising a serving macro cell operated in a first frequency band and serving a mobile station, the method comprising the steps of:
a. assigning by a network node operating the serving macro cell, a first measurement time period to the mobile station during which measurements of neighboring cells within a second frequency band distinct from the first frequency band are performed;
b. detecting a proximity of the mobile station with respect to a neighboring pico cell operated in the second frequency band; and
c. upon receiving, from the network node, a time period message comprising a second measurement time period smaller than the first measurement time period, switching by the mobile station from the first measurement time period to the second smaller measurement time period during which measurements of at least the pico cell within the second frequency band are performed.

The measurement in the second frequency band of attributes of the pico cell needs to be performed in a transmission/reception gap within a predetermined duration during which the mobile station doesn't receive effective data. The legacy duration of the transmission/reception gap is used as a single value only (i.e. the first measurement time period), which is inadequate for a system comprising different types of cells (e.g. macro cells and pico cells). In fact, the predetermined duration may be too long for saving the battery power of the mobile station. This results in a bad handover performance. In an extreme case, the mobile station can leave the pico cell coverage area even before the inter-frequency/inter-RAT handover procedure is finished. The predetermined duration may also be too short to easily detect the pico cell. In this case it is inefficient for the battery power and for effective data transfer with the macro cell.

The present method is an adaptive inter-frequency/inter-RAT measurement method which considers pico cells deployments and keeps legacy behavior for non-Heterogeneous relations involving macro cells. It allows for a fast cell detection using the proximity information associated to the pico cell. In addition, the measurement time period is selected dynamically based on the location of the pico cell and the location of the mobile station. This improves the handover performance and allows for an efficient mobility between different sized cells within the mobile communication system.

The proximity criterion may be, for example, the comparison of the signal strength of a first signal received by the mobile station from a first base station operating the macro cell and the signal strength of a second signal received by the mobile station from a second base station operating the pico cell.

According to one embodiment, the proximity criterion is detected by the mobile station by means of a neighbor cell list comprising an identifier of the pico cell and proximity information of the pico cell.

The neighbor cell list comprises candidate cells that the mobile station can consider for performing neighbor cell measurements. The mobile station attempts to detect all candidate cells in the neighbor cell list, and selects the cell fulfilling the proximity criterion.

According to one embodiment, the proximity information comprise any of the following pieces of information, or a combination thereof:
- geographical location information of the pico cell,
- signal strength/quality measurement threshold of the pico cell,
- uplink time difference of arrival threshold of the pico cell.

An example of the geographical location information is the Global Positioning System (GPS) coordinates of the pico cell.

These pieces of information may be used in the proximity criterion. For example, the proximity criterion may be the comparison of the uplink time difference of arrival of a signal between the pico cell and the mobile station and the uplink time difference of arrival threshold, or the comparison of the signal strength/quality from the pico cell with a signal strength/quality threshold.

According to one embodiment, the proximity information are autonomously built by means of further measurement reports gathered from the mobile station and/or further mobile stations.

With the help of inter-frequency Automatic Neighbor Relation (ANR) function, the neighbor cell list is developed and managed by a controller operating the macro cell. The neighbor cell list comprises the pico cell specific information identifiers, like the Physical Cell Identifier (PCI) and the E-UTRAN cell global identifier (ECGI). In addition, the present method extends the content of the neighbor cell list by associating to the pico cell proximity information. These proximity information provide precise information such as location associated with coverage radius of the pico cell. This allows for a precise estimation of the cell location with respect to the mobile station, and therefore facilitates fast cell detection.

According to one embodiment, the proximity information are pre-configured.

According to one embodiment, the proximity criterion is detected by a network node operating or controlling the macro cell by means of periodic measurement reports sent by the mobile station.

According to one embodiment, the periodic measurement reports comprise signal strength/quality measurement reports of the pico cell and/or geographical positioning reports of the mobile station.

An example of signal strength is the receive signal power or receive signal amplitude.

The signal quality is indicated, for example, by the signal to noise ratio.

According to one embodiment, the method further comprises the step of sending the first and second measurement time periods to the mobile station for autonomous selection by the mobile station.

The first and second measurement time periods are sent to the mobile station as a Radio Resource Control (RRC) message. For this, the "information element" in the RRC Message has to be changed in order to accommodate the second measurement time period. This has the advantage of using only one RRC configuration in order to communicate additional information, such as the second measurement time period.

According to one embodiment, the method further comprises the step of sending the first measurement time period to the mobile station, and upon detection of the proximity criterion, the method further comprises the subsequent step of sending the second measurement time period to the mobile station. This is advantageous, because the two time periods are sent in two different messages. This can be implemented with the old RRC Messages with no need of a dedicated configuration of the RRC message.

In a further aspect, the present invention relates to a measurement controller for use in a mobile communication system comprising a serving macro cell operated in a first frequency band and serving a mobile station, the measurement controller comprising configuration logic for assigning a first measurement time period to the mobile station for measurements of neighboring cells within a second frequency band distinct from the first frequency band, and further for assigning a second smaller measurement time period to the mobile station for measurements of at least the neighboring pico cell within the second frequency band, which second measurement time period being used when a proximity of the mobile station with respect to the pico cell is detected.

According to one embodiment, the configuration logic is for further building a neighbor cell list comprising an identifier of the pico cell and proximity information of the pico cell.

According to one embodiment, a radio access node comprises the measurement controller.

According to one embodiment, a radio access controller comprises the measurement controller.

Said embodiments may be advantageous in that they support multiple radio access technologies such as GSM, UMTS and LTE systems. In such systems, the radio access points are implemented as enhanced Node-B (eNB) under LTE system, Node-B under UMTS system and Base Transceiver Station (BTS) under GSM system.

In another aspect, the present invention relates to a mobile station to be served by a serving macro cell operated in a first frequency band, and comprising configuration logic for configuring a first measurement time period for measurements of neighboring cells within a second frequency band distinct from the first frequency band, detection logic for detecting a proximity to the mobile station with respect to a neighboring pico cell operated in the second frequency band by means of a neighbor cell list comprising an identifier of the pico cell and proximity information of the pico cell, for sending to a network node operating the macro cell a proximity data message indicating the detection of the pico cell, and for receiving a time period message comprising a second measurement period smaller than the first measurement time period, and wherein upon the detection logic has detected a proximity to the mobile station with respect to a neighboring pico cell, the configuration logic is further adapted for switching from the first measurement time period to the second smaller measurement time period for measurements of at least the pico cell within the second frequency band.

Embodiments of a measurement controller according to the invention and embodiments of a mobile station according to the invention correspond with the embodiments of a method according to the invention.

### Brief description of the drawings

In the following, preferred embodiments of the invention will be described in greater detail by way of example only making reference to the drawings in which:
- Fig. 1: is a diagram illustrating parts of a mobile communication system for the execution of a method for efficient mobility handling.
- Fig. 2: is a first message flow diagram for measurement reporting,
- Fig. 3: is a diagram illustrating a handover process dependent on a position of a user equipment to a base station,
- Fig. 4: is a second message flow diagram for measurement reporting, and
- Fig. 5: is a third message flow diagram for measurement reporting.

### Detailed description

In the following, like numbered elements in these figures are either similar elements or perform an equivalent function. Elements which have been discussed previously will not necessarily be discussed in later figures if the function is equivalent.

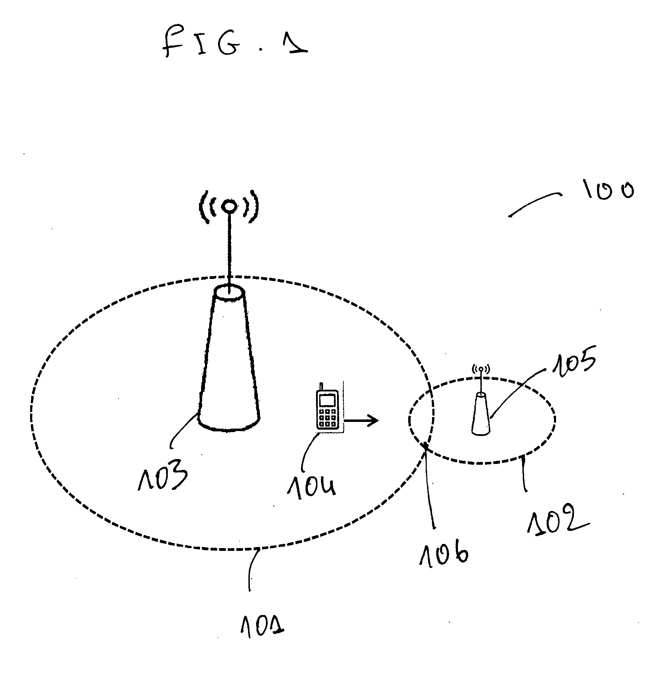

FIG. 1 shows a cell structure 100 as part of a mobile telecommunication system. The cell structure is separated into two regions or cells. A macro cell 101 is served by a first base station 103. The macro cell 101 has a neighboring pico cell 102, where the pico cell could be also completely inside the coverage area of the macro cell 101. The pico cell 102 includes a second base station 105.

Both first and second base stations 103 and 105 operate using different frequency bands. A mobile station 104 is communicating with the first base station 103 and transitioning to the second base station 105. When the mobile station 104 is in the overlapping region 106 where the macro cell and the pico cell overlap, it may receive transmission signals of comparable strength from the respective base stations 103, 105 of the overlapping cells 101, 102. When crossing the overlapping region 106 the mobile station 104 may perform inter-frequency handover. A certain time period for establishing inter-frequency measurements in the overlapping region 106 is required. During that time period, signal transmission to the mobile station 104 is suspended.

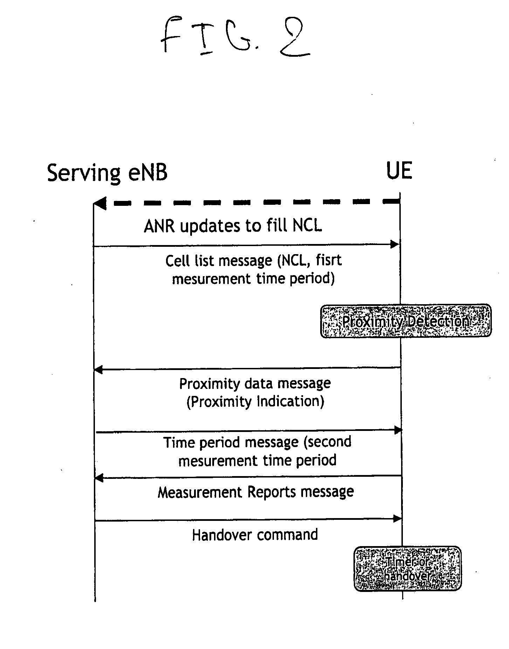

Fig. 2 is a message flow diagram illustrating a process of an inter-frequency handover in a LTE system. The LTE system comprises at least two cells, a macro cell operated in a first frequency band by a serving eNB and a pico cell operated in a second frequency band by a pico cell eNB. The first and second frequency bands are distinct.

A user equipment (UE) is served by the macro cell and a first measurement time period for measurements of neighboring cells within a second frequency band to the mobile station. The serving eNB may provide a neighboring cell list (NCL) using input from the UE. The NCL comprises an identifier of the pico cell and proximity information of the pico cell. These information are autonomously built by means of further measurement reports gathered from the mobile station and/or further mobile stations. In fact, the serving eNB may instruct the UE to perform measurements and detect cells on other RATs/frequencies. The UE may transmit cell information in a measurement report message to the serving eNB. The cell information comprises the proximity information. The proximity information is derived from one location information of the cell or by combining at least two location information of the cell. The location information may be for example GPS coordinates and/or RSRP measurements of the cell.

The serving eNB transmits measurement configuration information to the UE. This can be done for example in an RRC Connection Request message. The information comprises, for example, the neighbor cell list (NCL) and the first measurement time period. During continuous mode operation the UE detects the proximity to the pico cell with the help of the NCL and sends to the serving eNB a proximity data message indicating detection of the pico cell.

In response to the proximity data message, the eNB sends to the mobile station a time period message comprising a second measurement time period smaller than the first measurement time period, because of the smaller size of the pico cell. During the second measurement period, the UE may perform inter-frequency measurement in the second frequency band according to the measurement configuration information. For example, the UE may measure the signal strength of the pico cell.

Upon receiving a measurement report message comprising performed measurements data from the UE, the serving eNB evaluates them and makes an inter-frequency handover decision towards the pico cell. After receiving the handover command from the serving eNB, the UE initiates a handover to the pico cell. In case the serving eNB makes a no-handover decision towards the pico cell, a timer unit for the pico cell is started. This timer unit is configured to measure the expiry of the second measurement time period. After the timer exceeds the second measurement time period, the serving eNB adapt the second measurement time period to define a third measurement time period which is equal to the first time period. And, the UE is still served by the macro cell.

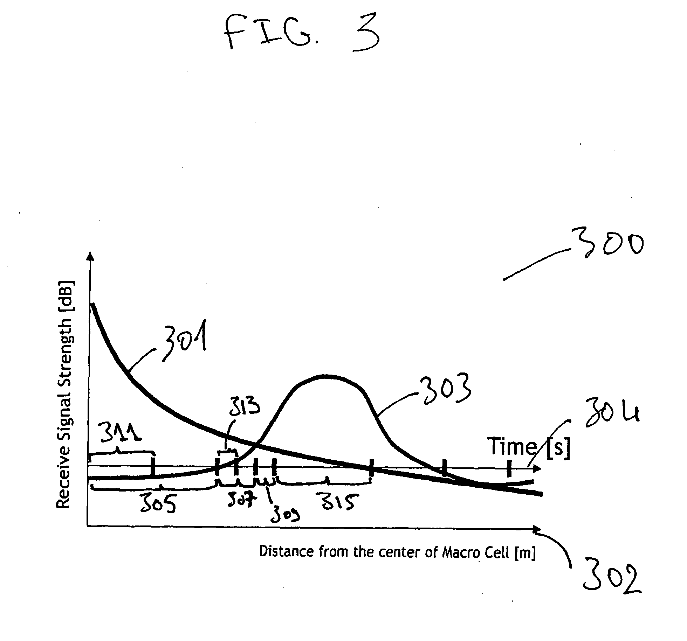

FIG. 3 illustrates schematically how the signal strength of a radio connection of the UE with the serving eNB and the UE with the pico cell eNB values vary as functions of the distance from the serving eNB. Initially, the UE is in the macro cell area coverage associated with the serving eNB. This corresponds to the first period 305 of the time axis 304 corresponding to the distance axis 302 of the graph 300. During the first period 305 the signal strength received from the eNB (curve 301) by the UE is much higher than the signal strength (curve 303) of the signal from the pico cell eNB. The UE enters a second area corresponding to a second time period 307. When approaching the pico cell, the UE detects the proximity to the pico cell and sends a message to the serving eNB. This message indicates the detection of the pico cell. After the detection of the proximity to the pico cell, the serving eNB sends back to the UE a second smaller measurement time period 313. During the second time period 307, the difference between the signal strength of the signal received from the serving eNB and the pico cell eNB at the UE becomes smaller. The second area 307 is adjacent to the handover area 309. The handover area 309 corresponds to an interval during which the signal strength provided by pico cell exceeds the signal strength of the macro cell by a certain amount. In the handover area 309, the pico cell is overlapped within the macro cell. At some point in this handover area 309, the UE stops communicating with the serving eNB and starts communicating with the pico cell eNB. After performing the handover, the second time period 313 is reconfigured to an updated time period 315.

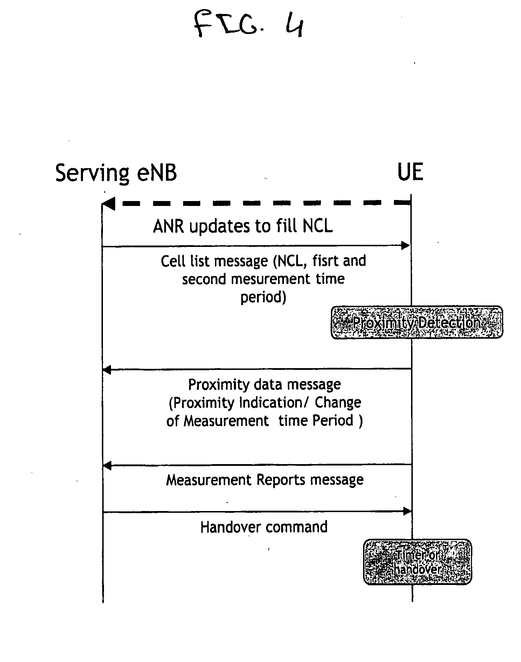

Fig. 4 is a message flow diagram illustrating an alternative process to the process of Fig. 3 of an inter-frequency handover in a LTE system. The LTE system comprises at least two cells, a macro cell operated in a first frequency band by a serving eNB and a pico cell operated in a second frequency band by a pico cell eNB.

A user equipment (UE) is served by the macro cell and a first measurement time period for the first frequency band is assigned to the UE. The serving eNB may provide a neighboring cell list (NCL) as described above. The serving eNB transmits measurement configuration information to the UE. The information comprises, for example, the neighbor cell list (NCL), first and second measurement periods. The second measurement time period is smaller than the first measurement time period, because of the smaller size of the pico cell.

During operation the UE detects the proximity to the pico cell with the help of the NCL, and thus, switches from the first measurement time period to a second smaller measurement time period for measurements of at least the pico cell within the second frequency band. The UE may, send a proximity data message to the radio access arrangement. This message is indicative of the proximity detection and of the change from the first measurement time period to the second measurement time period. During the second measurement period the UE may perform inter-frequency measurement in the second frequency band according to the measurement configuration information. For example, the UE may measure the signal strength of the pico cell.

Upon receiving a measurement report message comprising performed measurements data from the UE, the serving eNB evaluates them and makes an inter-frequency handover decision towards the pico cell. After receiving the handover command from the serving eNB, the UE initiates a handover to the pico cell. In case the serving eNB makes a no-handover decision towards the pico cell, a timer unit for the pico cell is started. This timer unit is configured to measure the expiry of the second measurement time period. After the timer exceeds the second measurement time period, the serving eNB defines the second measurement time period as a third measurement time period which is equal to the first time period. And, the UE is still served by the macro cell.

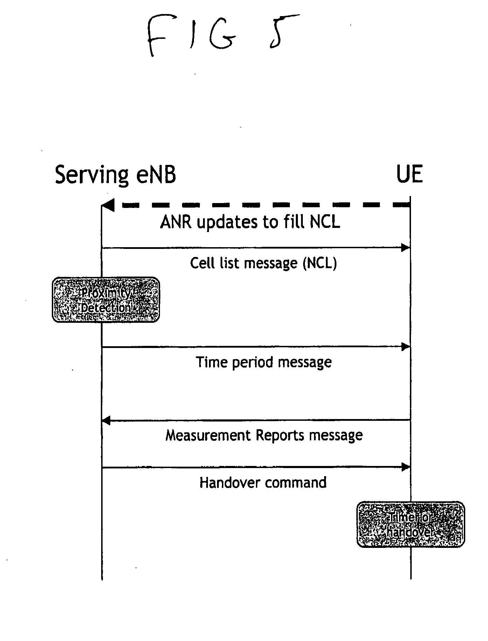

Fig. 5 is a message flow diagram illustrating another alternative process to the process of Fig. 3 of an inter-frequency handover in a LTE system. The LTE system comprises at least two cells, a macro cell operated in a first frequency band by a serving eNB and a pico cell operated in a second frequency band by a pico cell eNB.

A user equipment (UE) is served by the macro cell and a first measurement time period for the first frequency band is assigned to the UE. The serving eNB may provide a neighboring cell list (NCL) as described above. The serving eNB transmits measurement configuration information to the UE. The information comprises, for example, the neighbor cell list (NCL). During continuous mode operation the eNB detects the proximity to the pico cell with the help of the NCL. This is done, for example, by comparing a signal strength of a first signal received by the mobile station from a first controller operating the macro cell and the signal strength of a second signal received by the mobile station from a second controller operating the pico cell.

Next, the eNB sends to the mobile station a time period message comprising a second measurement period smaller than the first measurement time period, because of the smaller size of the pico cell. During the second measurement period the UE may perform inter-frequency measurement in the second frequency band according to the measurement configuration information. For example, the UE may measure the signal strength of the pico cell.

Upon receiving a measurement report message comprising performed measurements data from the UE, the serving eNB evaluates them and makes an inter-frequency handover decision towards the pico cell. After receiving the handover command from the serving eNB, the UE initiates a handover to the pico cell. Next, the eNB defines the second measurement time period as a third measurement time period.

### List of reference numerals

100 cell structure
101 macro cell
102 pico cell
103 base station
104 mobile station
105 base station
106 overlapping region
300 graph
301,303 curve
302 distance axis
304 time axis
305 first period
307 second period
309 handover area
311, 313 measurement period
315 updated time period

## Claims

1. A method for efficient mobility handling in a mobile communication system (100) comprising a serving macro cell (101) operated in a first frequency band and serving a mobile station (104), the method comprising the steps of:
a. Assigning, by a network node (103) operating the serving macro cell, a first measurement time period to the mobile station (104) during which measurements of neighboring cells within a second frequency band distinct from the first frequency band are performed;
b. Detecting a proximity of the mobile station (104) with respect to a neighboring pico cell (102) operated in the second frequency band; and
c. upon receiving, from the network node (103), a time period message comprising a second measurement time period smaller than the first measurement time period switching, by the mobile station (104), from the first measurement time period to the second smaller measurement time period during which measurements of at least the pico cell (102) within the second frequency band are performed.

2. A method according to claim 1, wherein the proximity is detected by the mobile station (104) by means of a neighbor cell list comprising an identifier of the pico cell (102) and proximity information of the pico cell (102), the method further comprising sending by the mobile station to the network node (103) operating the macro cell a proximity data message indicating the detection of the neighboring pico cell.

3. A method according to claim 1, wherein the proximity is detected by a network node (103) operating or controlling the macro cell (101) by means of periodic measurement reports sent by the mobile station (104).

4. A method according to claim 3, wherein the periodic measurement reports comprise signal strength/quality measurement reports of the pico cell (102) and/or geographical positioning reports of the mobile station (104).

5. A method according to claim 2, wherein the method further comprises the step of sending the first and second measurement time periods to the mobile station (104) for autonomous selection by the mobile station (104).

6. A method according to any of claims 1 to 4, wherein the method further comprises the step of sending the first measurement time period to the mobile station (104), and upon detection of the proximity criterion, the method further comprises the subsequent step of sending the second measurement time period to the mobile station (104).

7. A method according to claim 2, wherein the proximity information comprise any of the following pieces of information, or a combination thereof:
- geographical location information of the pico cell (102),
- signal strength/quality measurement threshold of the pico cell (102),
- uplink time difference of arrival threshold of the pico cell (102).

8. A method according to claim 2, wherein the proximity information are autonomously built by means of further measurement reports gathered from the mobile station and/or further mobile stations.

9. A method according to claims 2, wherein the proximity information are pre-configured.

10. A measurement controller (103) for use in a mobile communication system (100) comprising a serving macro cell (101) operated in a first frequency band and serving a mobile station(104), the measurement controller (103) comprising configuration logic for assigning a first measurement time period to the mobile station (104) for measurements of neighboring cells within a second frequency band distinct from the first frequency band, and further for assigning a second measurement time period smaller than the first measurement time period to the mobile station for measurements of at least the neighboring pico cell (102) within the second frequency band, which second measurement time period being used when a proximity of the mobile station with respect to the pico cell (102) is detected.

11. A measurement controller according to claim 10, wherein the configuration logic is for further building a neighbor cell list comprising an identifier of the pico cell (102) and proximity information of the pico cell (102).

12. A radio access node comprising a measurement controller (103) according to claim 10 or 11.

13. A radio access controller comprising a measurement controller (103) according to claim 10 or 11.

14. A mobile station (104) to be served by a serving macro cell (101) operated in a first frequency band, and comprising configuration logic for configuring a first measurement time period for measurements of neighboring cells within a second frequency band distinct from the first frequency band, detection logic for detecting a proximity to the mobile station (104) with respect to a neighboring pico cell (102) operated in the second frequency band by means of a neighbor cell list comprising an identifier of the pico cell (102) and proximity information of the pico cell (102), for sending to a network node (103) operating the macro cell a proximity data message indicating the detection of the pico cell, and for receiving a time period message comprising a second measurement period smaller than the first measurement time period, and wherein upon the detection logic has detected a proximity to the mobile station with respect to a neighboring pico cell, the configuration logic is further adapted for switching from the first measurement time period to the second smaller measurement time period for measurements of at least the pico cell (102) within the second frequency band.

## Patentansprüche

1. Verfahren zur effizienten Handhabung der Mobilität in einem mobilen Kommunikationssystem (100) mit einer bedienenden Makrozelle (101), welche in einem ersten Frequenzband betrieben wird und eine Mobilstation (104) bedient, wobei das Verfahren die folgenden Schritte umfasst:
a. Zuteilen, durch einen die bedienende Makrozelle betreibenden Netzwerkknoten (103), einer ersten Messzeitperiode, während welcher Messungen von benachbarten Zellen innerhalb eines zweiten Frequenzbands, welches sich von dem ersten Frequenzband unterscheidet, durchgeführt werden, an die Mobilstation (104);
b. Erkennen einer Proximität der Mobilstation (104) in Bezug auf eine benachbarte Picozelle (102), welche in dem zweiten Frequenzband betrieben wird; und
c. nach Empfang, von dem Netzwerkknoten (103), einer Zeitperiodennachricht, welche eine zweite Messzeitperiode enthält, die kürzer ist als die erste Messzeitperiode, Umschalten, durch die Mobilstation (104), von der ersten Messzeitperiode zu der kürzeren zweiten Messzeitperiode, während welcher Messungen zumindest der Picozelle (102) innerhalb des zweiten Frequenzbands durchgeführt werden.

2. Verfahren nach Anspruch 1, wobei die Proximität anhand einer Nachbarzellenliste, welche eine Kennung der Picozelle (102) und Proximitätsinformationen der Picozelle (102) enthält, durch die Mobilstation (104) erkannt wird, wobei das Verfahren weiterhin das Senden, durch die Mobilstation, einer Proximitätsdatennachricht mit Angabe der Erkennung der benachbarten Picozelle an den Netzwerkknoten (103), welcher die Makrozelle betreibt, umfasst.

3. Verfahren nach Anspruch 1, wobei die Proximität durch einen Netzwerkknoten (103), welcher die Makrozelle (101) betreibt oder steuert, anhand von von der Mobilstation (104) gesendeten periodischen Messberichten erkannt wird.

4. Verfahren nach Anspruch 3, wobei die periodischen Messberichte Signalstärken-/Qualitätsmessberichte der Picozelle (102) und/oder geografische Positionierungsberichte der Mobilstation (104) umfassen.

5. Verfahren nach Anspruch 2, wobei das Verfahren weiterhin den Schritt des Sendens der ersten und der zweiten Messzeitperiode an die Mobilstation (104) zur automatischen Auswahl durch die Mobilstation (104) umfasst.

6. Verfahren nach einem beliebigen der Ansprüche 1 bis 4, wobei das Verfahren weiterhin den Schritt des Sendens der ersten Messzeitperiode an die Mobilstation (104) umfasst, und wobei das Verfahren nach Erkennen des Proximitätskriteriums weiterhin den nachfolgenden Schritt des Sendens der zweiten Messzeitperiode an die Mobilstation (104) umfasst.

7. Verfahren nach Anspruch 2, wobei die Proximitätsinformationen eine beliebige der folgenden Informationen oder eine Kombination davon umfassen:
- Geografische Standortinformationen der Picozelle (102),
- Signalstärken-/Qualitätsmessgrenzwert der Picozelle (102)
- Uplink-Zeitdifferenz des Ankunftsgrenzwerts der Picozelle (102).

8. Verfahren nach Anspruch 2, wobei die Proximitätsinformationen anhand von weiteren von der Mobilstation und/oder weiteren Mobilstationen erfassten Messberichten autonom erstellt werden.

9. Verfahren nach Anspruch 2, wobei die Proximitätsinformationen vorkonfiguriert sind.

10. Messregler (103) zur Verwendung in einem mobilen Kommunikationssystem (100) mit einer bedienenden Makrozelle (101), welche in einem ersten Frequenzband betrieben wird und eine Mobilstation (104) bedient, wobei der Messregler (103) eine Konfigurationslogik für das Zuteilen einer ersten Messzeitperiode an die Mobilstation (104) für Messungen von benachbarten Zellen innerhalb eines zweiten Frequenzbands, welches sich von dem ersten Frequenzband unterscheidet, und weiterhin für das Zuteilen einer zweiten Messzeitperiode, welche kürzer als die erste Messzeitperiode ist, an die Mobilstation für Messungen zumindest der benachbarten Picozelle (102) innerhalb des zweiten Frequenzbands umfasst, wobei die zweite Messzeitperiode benutzt wird, wenn eine Proximität der Mobilstation in Bezug auf die Picozelle (102) erkannt wird.

11. Messregler nach Anspruch 10, wobei die Konfigurationslogik für das weitere Erstellen einer Nachbarzellenliste mit einer Kennung der Picozelle (102) sowie Proximitätsinformationen der Picozelle (102) bestimmt ist.

12. Funkzugangsknoten mit einem Messregler (103) nach Anspruch 10 oder 11.

13. Funkzugangs-Controller mit einem Messregler (103) nach Anspruch 10 oder 11.

14. Mobilstation (104), dafür bestimmt, von einer in einem ersten Frequenzband betriebenen bedienenden Makrozelle (101) bedient zu werden, und umfassend eine Konfigurationslogik für das Konfigurieren einer ersten Messzeitperiode für Messungen von benachbarten Zellen innerhalb eines zweiten Frequenzbands, welches sich von dem ersten Frequenzband unterscheidet, eine Erkennungslogik für das Erkennen einer Proximität zu der Mobilstation (104) in Bezug auf die in dem zweiten Frequenzband betriebene Picozelle (102) anhand einer Nachbarsellenliste, welche eine Kennung der Picozelle (102) sowie Proximitätsinformationen der Picozelle (102) enthält, zum Senden einer Proximitätsdatennachricht, welche die Erkennung der Picozelle anzeigt, an den Netzwerkknoten (103), welcher die Makrozelle betreibt, und zum Empfangen einer Zeitperiodennachricht, welche eine zweite Messperiode, die kürzer als die erste Messzeitperiode ist, enthält, und wobei die Konfigurationslogik weiterhin dazu ausgelegt ist, nach Erkennen einer Proximität zu der Mobilstation in Bezug auf die benachbarte Picozelle von der ersten Messzeitperiode zu der kürzeren zweiten Messzeitperiode umzuschalten, um Messungen zumindest der Picozelle (102) innerhalb des zweiten Frequenzbands durchzuführen.

## Revendications

1. Procédé de gestion efficace de la mobilité dans un système de communication mobile (100) comprenant une macrocellule de desserte (101) exploitée dans une première bande de fréquences et desservant une station mobile (104), le procédé comprenant les étapes suivantes :
a. attribuer, au moyen d'un noeud de réseau (103) exploitant la macrocellule de desserte, une première période de mesure à la station mobile (104) durant laquelle des mesures de cellules voisines, dans une deuxième bande de fréquences distincte de la première bande de fréquences, sont effectuées ;
b. détecter une proximité de la station mobile (104) par rapport à une picocellule voisine (102) exploitée dans la deuxième bande de fréquences ; et
c. lors de la réception, à partir du noeud de réseau (103), d'un message de période comprenant une deuxième période de mesure plus courte que la première période de mesure passer, au moyen de la station mobile (104), de la première période de mesure à la deuxième période de mesure plus courte durant lesquelles des mesures d'au moins la picocellule (102) dans la deuxième bande de fréquences sont effectuées.

2. Procédé selon la revendication 1, dans lequel la proximité est détectée par la station mobile (104) au moyen d'une liste de cellules voisines comprenant un identifiant de la picocellule (102) et des informations de proximité de la picocellule (102), le procédé comprenant en outre l'envoi par la station mobile au noeud de réseau (103) exploitant la macrocellule d'un message de données de proximité indiquant la détection de la picocellule voisine.

3. Procédé selon la revendication 1, dans lequel la proximité est détectée par un noeud de réseau (103) exploitant ou commandant la macrocellule (101) au moyen de rapports de mesure périodiques envoyés par la station mobile (104).

4. Procédé selon la revendication 3, dans lequel les rapports de mesure périodiques comprennent des rapports de mesure de l'intensité/de la qualité de signal de la picocellule (102) et/ou de rapports de positionnement géographique de la station mobile (104).

5. Procédé selon la revendication 2, le procédé comprenant en outre l'étape d'envoi des première et deuxième périodes de mesure à la station mobile (104) pour la sélection autonome par la station mobile (104).

6. Procédé selon l'une quelconque des revendications 1 à 4, le procédé comprenant en outre l'étape d'envoi de la première période de mesure à la station mobile (104) et, lors de la détection du critère de proximité, le procédé comprend en outre l'étape ultérieure d'envoi de la deuxième période de mesure à la station mobile (104).

7. Procédé selon la revendication 2, dans lequel les informations de proximité comprennent l'une quelconque des informations suivantes, ou une combinaison de celles-ci :
- informations de localisation géographique de la picocellule (102),
- seuil de mesure de l'intensité/de la qualité de signal de la picocellule (102),
- différence temporelle de liaison montante du seuil d'arrivée de la picocellule (102).

8. Procédé selon la revendication 2, dans lequel les informations de proximité sont générées de manière autonome au moyen d'autres rapports de mesure recueillis par la station mobile et/ou d'autres stations mobiles.

9. Procédé selon la revendication 2, dans lequel les informations de proximité sont pré-configurées.

10. Contrôleur de mesure (103) destiné à être utilisé dans un système de communication mobile (100) comprenant une macrocellule de desserte (101) exploitée dans une première bande de fréquences et desservant une station mobile (104), le contrôleur de mesure (103) comprenant une logique de configuration pour attribuer une première période de mesure à la station mobile (104) pour des mesures de cellules voisines dans une deuxième bande de fréquences distincte de la première bande de fréquences, et en outre pour attribuer une deuxième période de mesure plus courte que la première période de mesure à la station mobile pour des mesures d'au moins la picocellule voisine (102) dans la deuxième bande de fréquences, laquelle deuxième période de mesure étant utilisée lorsqu'une proximité de la station mobile par rapport à la picocellule (102) est détectée.

11. Contrôleur de mesure selon la revendication 10, dans lequel la logique de configuration est en outre destinée à générer une liste de cellules voisines comprenant un identifiant de la picocellule (102) et des informations de proximité de la picocellule (102).

12. Noeud d'accès radio comprenant un contrôleur de mesure (103) selon la revendication 10 ou 11.

13. Contrôleur d'accès radio comprenant un contrôleur de mesure (103) selon la revendication 10 ou 11.

14. Station mobile (104) destinée à être desservie par une macrocellule de desserte (101) exploitée dans une première bande de fréquences, et comprenant une logique de configuration pour configurer une première période de mesure pour des mesures de cellules voisines dans une deuxième bande de fréquences distincte de la première bande de fréquences, une logique de détection pour détecter une proximité de la station mobile (104) par rapport à une picocellule voisine (102) exploitée dans la deuxième bande de fréquences au moyen d'une liste de cellules voisines comprenant un identifiant de la picocellule (102) et des informations de proximité de la picocellule (102), pour envoyer à un noeud de réseau (103) exploitant la macrocellule un message de données de proximité indiquant la détection de la picocellule, et pour recevoir un message de période comprenant une deuxième période de mesure plus courte que la première période de mesure, et dans laquelle lorsque la logique de détection a détecté une proximité de la station mobile par rapport à une picocellule voisine, la logique de configuration est en outre adaptée pour passer de la première période de mesure à la deuxième période de mesure plus courte pour des mesures d'au moins la picocellule (102) dans la deuxième bande de fréquences.
